# EUROPÄISCHE PATENTSCHRIFT

(11) **EP 1 806 253 B1**
(45) Veröffentlichungstag und Bekanntmachung des Hinweises auf die Patenterteilung: **09.03.2011**
(21) Anmeldenummer: 07000012.0
(22) Anmeldetag: 02.01.2007
(51) Int. Cl.: B60J 7/047

(54) **Dach für ein Kraftfahrzeug**
Roof for a motor vehicle
Toit pour véhicule automobile

(30) Priorität: 05.01.2006 DE 102006000849
(43) Veröffentlichungstag der Anmeldung: 11.07.2007
(73) Patentinhaber: Magna Car Top Systems GmbH, 74321 Bietigheim-Bissingen (DE)
(72) Erfinder: Salz, Wolfram, 74343 Sachsenheim (DE)

(56) Entgegenhaltungen:
- EP-A- 1 541 399
- EP-A1- 1 236 601
- EP-A1- 1 275 541
- EP-A1- 1 295 744
- GB-A- 2 147 943
- US-A- 5 941 598

## Beschreibung

Die Erfindung bezieht sich auf ein Dach für ein Kraftfahrzeug, insbesondere Personenkraftwagen, nach dem Oberbegriff des Patentanspruch 1. Ein solches Dach ist aus der EP 1 541 399 A1 bekannt.

Die EP 1 541 399 A1 befasst sich mit einem Fahrzeugdach mit öffnungsfähigen Deckeln. Am vorderen Deckel ist eine dreieckhebelartige Abstützvorrichtung angebracht, die einen oberen Anlenkpunkt nahe der Hinterkante des vorderen Deckels besitzt. Beabstandet dazu ist die Abstützvorrichtung mit zwei Gleitelementen versehen, die mit einer Führung des Aufbaus zusammenarbeiten. Die Führung ist fester Bestandteil des Aufbaus und erstreckt sich in Fahrzeuglängsrichtung. Wird der der vordere Deckel aus einer abgesenkten Stellung heraus nach hinten verbracht, so bewegt die Abstützvorrichtung den vorderen Deckel aufgrund ihrer konstruktiven Auslegung hinten hoch und gleitet mit den Gleitelementen in der obigen Führung. Dabei wird der hintere Deckel nicht von der längsbeweglichen Abstützvorrichtung beeinflusst.

Ein bekanntes Fahrzeugdach, DE 197 13 347 C1, besitzt drei Dachelemente, nämlich ein bewegliches Luftleitelement, einen in Fahrzeuglängsrichtung verschiebbaren Deckel und ein festes Dachelement. Bei Längsverschiebungen des Deckels arbeitet dieser mit einem Hebelwerk zusammen, dergestalt, dass der Deckel, um ihn über das feste Dachelement bzw. zurück in seine Schließstellung bewegen zu können, entweder angehoben oder abgesenkt wird.

In der DE 102 39 863 A1 wird ein Aufbau mehrere Dachelemente behandelt, wovon ein Schiebe-Dachelement unter Zwischenschaltung eines Winkelhebels anheb- bzw. absenkbar ist. In der angehobenen Stellung des Schiebe-Dachelements, wird der zwei Arme aufweisend Winkelhebel in einer festen Kulisse des Aufbaus geführt, wobei der eine Arm aufrecht steht und der anderer Arm eine horizontale Lage einnimmt.

Aus der DE 37 25 982 C2 geht ein Kombi-Fahrzeug hervor, dessen Dach eine zwei hintereinander liegenden Dachteile umfassende Öffnung aufweist. Diese Dachteile sind übereinander schiebbar, wobei das vordere Dachteil im geöffneten Zustand zumindest abschnittsweise oberhalb des hinteren Dachteils liegt. Für das Anheben und Absenken des vorderen Dachteils dient eine Kurbel.

Es ist Aufgabe der Erfindung ein Dach für einen Personenkraftwagen mit einem vorderen Dachelement und einem hinteren Dachelement so zu gestalten, dass bei Längsbewegungen des vorderen Dachelements, das hintere Dachelement in eine Offenstellung bzw. Schließstellung verstellt wird.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das vordere Dachelement Längsbewegungen und das hintere Dachelement Schwenkbewegungen ausübt, wobei der Steuerhebel fest am Aufbau gelagert ist und sowohl am vorderen Dachelement wie auch am hinteren Dachelement angreift. Dadurch wird beim Verschieben des vorderen Dachelements eine zwangsgesteuerte Schwenkbewegung des hinteren Dachelements erreicht, und zwar ohne zusätzliche motorische Mittel für das hintere Dachelement vorzusehen. Der Steuerhebel ist als einfacher zweiarmiger Hebel ausgeführt, der mit Steuerzapfen in Aufnahmen des vorderen Dachelements und des hinteren Dachelements eingreift. Schließlich ermöglicht die Ausbildung des Steuerhebels und der Aufnahmen eine funktionsgerechte Steuerung der beiden Dachelemente zueinander.

In der Zeichnung wird ein Ausführungsbeispiel der Erfindung gezeigt, das nachstehend näher erläutert wird.

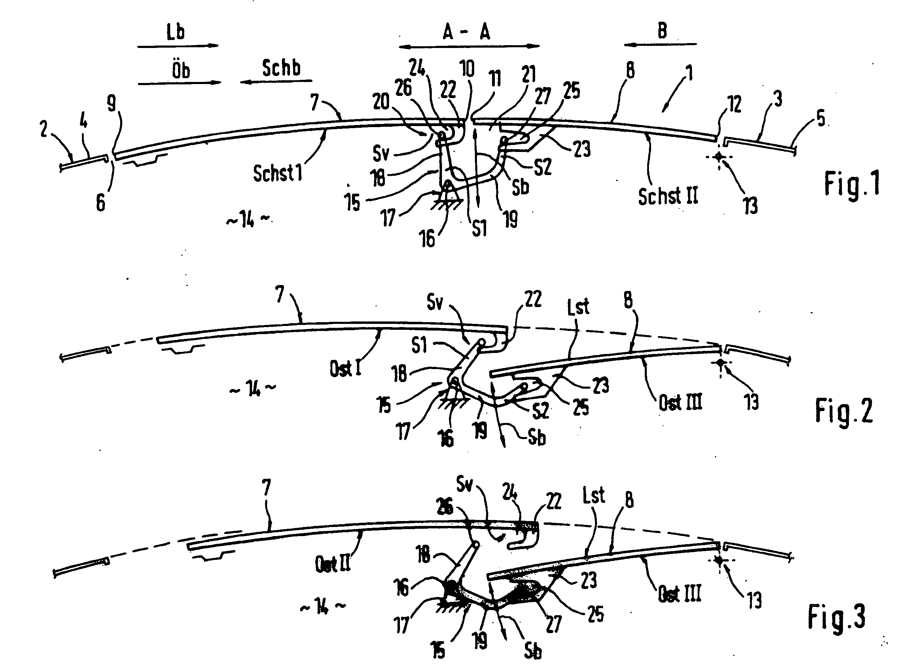

Es zeigen
Fig.1 ein schematischer Längsschnitt eines Dachs für einen Personenkraftwagen, bei dem zwei bewegliche Dachelemente eine Schließstellung einnehmen,
Fig. 2 eine Ansicht entsprechend Fig. 1, in der die Dachelemente in einer ersten Offenstellung festgelegt sind,
Fig. 3 eine Ansicht entsprechend Fig. 1, in der die Dachelemente in einer zweiten Offenstellung festgelegt sind.

Von einem Personenkraftwagen 1 ist lediglich ein Aufbau 2 mit einem Dach 3 dargestellt, das eine von einem vorderen Aufbauelement 4 und einem hinteren Aufbauelement 5 begrenzte Dachöffnung 6 aufweist. In die Dachöffnung 6 eingesetzt sind ein vorderes Dachelement 7 und ein hinters Dachelement 8, die wie eventuell auch die Aufbauelemente 5 und 6 aus durchscheinendem Glas bestehen können.

Das vordere Dachelement 7 umfasst eine vordere Begrenzung 9 sowie eine hintere Begrenzung 10 und ist mittels eines Elektromotors, Hydraulikmotors oder dgl. in Fahrzeuglängsrechtung A-A nach Art eines Schiebedachs betätigbar, dergestalt dass es durch Längsbewegungen Lb aus einer ersten Schließstellung Schstl in Offenstellungen OstI und OstII und vice versa verstellt wird. Dagegen übt das hintere Dachelement 8, das eine vordere Begrenzung 11 und eine hintere Begrenzung 12 aufweist, um eine Drehachse 13 Schwenkbewegungen Sb aus, welche Drehachse 13 quer zur Fahrzeuglängsrichtung A-A ausgerichtet und benachbart der hinteren Begrenzung 12 des besagten hinteren Dachelements 8 angeordnet ist. Dank der Anlenkung des hinteren Dachelements 8 kann es in die Offenstellung OstIII und eine zweite Schließstellung Schstll bewegt werden. Dabei entspricht die Offenstellung OstIII des hinteren Dachelements 7 einer Lüftungsstellung Lst für einen Fahrgastraum 14 des Aufbaus 2 des Personenkraftwagens 1.

Zwischen dem vorderen Dachelement 7 und dem hinteren Dachelement 8 ist ein Steuerhebel 15 wirksam, der in Abhängigkeit der Längsbewegungen Lb des vorderen Dachelements 7 Schwenkbewegungen Sb am hinteren Dachelement 8 auslöst. Der Steuerhebel 15 ist als zweiarmiger Hebel ausgebildet und unter Vermittlung einer Schwenkachse 16 an einem festen Lager 17 des Aufbaus 2 angebracht. Beide Hebelarme 18 und 19 wirken mit freien Enden 20 und 21 mit einer ersten Aufnahme 22 und einer zweite Aufnahme 23 des vorderen Dachelements 7 und des hinteren Dachelements 8 zusammen. Dabei ist die erste Aufnahme 22 benachbart der hinteren Begrenzung 10 des vorderen Dachelements 7 angeordnet; die zweite Aufnahme 23 benachbart der vorderen Begrenzung 11 des hinteren Dachelements 8.

Die Aufnahmen 22 und 23 sind mit ovalen bzw. schlitzartigen Steuerkulissen 24 und 25 versehen, in die Steuerzapfen 26 und 27 der Hebelarme 18 und 19, vorgesehen an den freien Enden 20 und 21, eingreifen. Darüber hinaus ist jede Aufnahme z.B. 22 in einer in Fahrtrichtung B gesehen vorne liegenden Seite Sv offen, dergestalt, dass in der Offenstellung OstIII des hinteren Dachelements 8eine vollständige Entkoppelung zwischen Steuerzapfen 26 des Hebelarms 18 des Steuerhebels 15 ermöglicht wird. Aus baulichen und kinematischen Gründen weist der Steuerhebel 15 eine U-förmige Gestalt auf, wobei Schenkel S1 uns S2 die Hebelarme 18 und 19 bilden.

Bei einer Öffnungsbewegung Öb des vorderen Dachelements 7 in eine der Offenstellungen OstI oder OstII schwenken der Steuerhebel 15 bzw. der Hebelarm 18 und der Hebelarm 19 um die Schwenkachse 16, wodurch das hintere Dachelement 8 über die Drehachse 13 zwangsgesteuert in die Offenstellung OstIII abgesenkt wird. In dieser Stellung sind der Hebelarm 18 und die erste Aufnahme 22 voneinander getrennt bzw. entkoppelt. Führt dagegen das vordere Dachelement 7 ein Schließbewegung Schb aus, so wird das hintere Dachelement 8 wieder angehoben und in seine Schließstellung Schstll verbracht.

## Patentansprüche

1. Dach für ein Kraftfahrzeug, insbesondere einen Personenkraftwagen mit einem Aufbau, der im Bereich eines Dachs wenigstens ein hinteres Dachelement und ein vorderes Dachelement aufweist, wobei beide flächigen Dachelemente beweglich ausgebildet sind und ein schwenkbarer Steuerhebel zur Beeinflussung des vorderen Dachelements vorgesehen ist, **dadurch gekennzeichnet, dass** der Steuerhebel (15) mit einer Schwenkachse (16) am Aufbau (2) gelagert ist und bei Längsbewegungen des vorderen Dachelements (7) das hintere Dachelement (8) in eine Offenstellung (OstIII) bzw. Schließstellung (Schst) verstellt wird und dass die Lagerung des Steuerhebels (15) am Aufbau (2) eine Zwangssteuerung des hinteren Dachelementes (8) relativ zum vorderen Dachelement (8) bewirkt.

2. Dach nach Anspruch 1, **dadurch gekennzeichnet, dass** der Steuerhebel (15) als zweiarmiger Hebel ausgebildet ist, wobei jedes freie Ende (20 und 21) der beiden Hebelarme (18 und 19) mit ersten und zweiten Aufnahmen (22 und 23) am vorderen Dachelement (8) und am hinteren Dachelement (9) zusammenwirkt.

3. Dach nach Anspruch 2, **dadurch gekennzeichnet, dass** die erste Aufnahme (22) benachbart einer hinteren Begrenzung (10) des vorderen Dachelements (9) angeordnet ist.

4. Dach nach Anspruch 2, **dadurch gekennzeichnet, dass** die zweite Aufnahme (23) benachbart einer vorderen Begrenzung (11) des hinteren Dachelements (9) angeordnet ist.

5. Dach nach den Ansprüchen 1 und 2, **dadurch gekennzeichnet, dass** die Aufnahmen (22 und 23) Steuerkulissen (24 und 25) mit einer in etwa ovalen Form aufweisen, in die korrespondierende Steuerzapfen (25 und 26) der beiden Hebelarme (18 und 19) eingreifen.

6. Dach nach den Ansprüchen 2 und 3, **dadurch gekennzeichnet, dass** zumindest die erste Aufnahme (22) des vorderen Dachelements (8) in einer in Fahrtrichtung (B) gesehen vorne liegenden Seite (Sv) offen ist.

7. Dach nach den Ansprüchen 2 und 3, **dadurch gekennzeichnet**, der Steuerhebel (15) eine U-förmige Gestalt aufweist, dessen Schenkel (S1 und S2) die Hebelarme (18 und 19) bilden.

8. Dach nach Anspruch 1, **dadurch gekennzeichnet, dass** das hintere Dachelement (8) benachbart einer hinteren Begrenzung (12) mittels einer Drehachse (13) am Aufbau (2) gelagert und eine vordere Begrenzung (11) des hinteren Dachelements (8) in Richtung eines Fahrgastraums (14) absenkbar ist.

9. Verfahren zum Betrieb der Dachelemente des Dachs nach einem oder mehreren der vorangehenden Dachelemente, **dadurch gekennzeichnet, dass** das vordere Dachelement (7) nach Art eines Schiebedachs längsbeweglich ist und bei Längsbewegungen (Lb) unter Vermittlung des Steuerhebels (15) mit dem hinteren Dachelement (8) zusammenwirkt, welcher Steuerhebel (15) zwangsgesteuert bei einer Öffnungsbewegung (Öb) des vorderen Dachelements (7) das hintere Dachelement (8) absenkt und bei einer Schließbewegung (Schb) des vorderen Dachelements (7) das hintere Dachelement (8) anhebt.

10. Verfahren nach Anspruch 9, **dadurch gekennzeichnet, dass** der Steuerhebel (15) in der Offenstellung (OstII) des vorderen Dachelements (7) von besagtem vorderen Dachelement (7) entkoppelt wird.

## Claims

1. Roof for a motor vehicle, in particular a passenger vehicle with a body which has at least one rear roof element and one front roof element in the region of a roof, wherein the two sheetlike roof elements are designed to be movable, and a pivotable control lever for influencing the front roof element is provided, **characterized in that** the control lever (15) is mounted on the body (2) by means of a pivot pin (16) and, upon longitudinal movements of the front roof element (7), the rear roof element (8) is displaced into an open position (OstIII) or closed position (Schst), and **in that** the mounting of the control lever (15) on the body (2) brings about a positive control of the rear roof element (8) relative to the front roof element (7).

2. Roof according to Claim 1, **characterized in that** the control lever (15) is designed as a two-armed lever, each free end (20 and 21) of the two lever arms (18 and 19) interacting with first and second receptacles (22 and 23) on the front roof element (7) and on the rear roof element (8).

3. Roof according to Claim 2, **characterized in that** the first receptacle (22) is arranged adjacent to a rear boundary (10) of the front roof element (7).

4. Roof according to Claim 2, **characterized in that** the second receptacle (23) is arranged adjacent to a front boundary (11) of the rear roof element (8).

5. Roof according to Claims 1 and 2, **characterized in that** the receptacles (22 and 23) have control slots (24 and 25) with an approximately oval shape in which corresponding control pins (25 and 26) of the two lever arms (18 and 19) engage.

6. Roof according to Claims 2 and 3, **characterized in that** at least the first receptacle (22) of the front roof element (7) is open on a side (Sv) which is at the front, as seen in the direction of travel (B).

7. Roof according to Claims 2 and 3, **characterized in that** the control lever (15) has a U-shaped configuration, the limbs (S1 and S2) of which form the lever arms (18 and 19).

8. Roof according to Claim 1, **characterized in that** the rear roof element (8) is mounted on the body (2) adjacent to a rear boundary (12) by means of a rotation axis (13), and a front boundary (11) of the rear roof element (8) can be lowered in the direction of a passenger compartment (14).

9. Method for operating the roof elements of the roof according to one or more of the preceding claims, **characterized in that** the front roof element (7) is movable longitudinally in the manner of a sliding roof and, upon longitudinal movements (Lb), interacts with the rear roof element (8) with the intervention of the control lever (15) which, upon an opening movement (Öb) of the front roof element (7), lowers the rear roof element in a positively controlled manner, and, upon a closing movement (Schb) of the front element (7), raises the rear roof element (8).

10. Method according to Claim 9, **characterized in that**, in the open position (Ostll) of the front roof element (7), the control lever (15) is decoupled from said front roof element (7).

## Revendications

1. Toit pour un véhicule automobile, en particulier un véhicule léger comprenant une carrosserie, qui présente, dans la région d'un toit, au moins un élément de toit arrière et un élément de toit avant, les deux éléments de toit plats étant réalisés de manière mobile et un levier de commande pivotant étant prévu pour influencer l'élément de toit avant, **caractérisé en ce que** le levier de commande (15) est monté avec un axe de pivotement (16) sur la carrosserie (2) et dans le cas de déplacements longitudinaux de l'élément de toit avant (7), l'élément de toit arrière (8) est déplacé dans une position d'ouverture (OstIII) ou dans une position de fermeture (Schst) et **en ce que** le support du levier de commande (15) sur la carrosserie (2) provoque une commande forcée de l'élément de toit arrière (8) par rapport à l'élément de toit avant (7).

2. Toit selon la revendication 1, **caractérisé en ce que** le levier de commande (15) est réalisé sous forme de levier à deux bras, chaque extrémité libre (20 et 21) des deux bras de levier (18 et 19) coopérant avec des premier et deuxième logements (22 et 23) sur l'élément de toit avant (7) et sur l'élément de toit arrière (8).

3. Toit selon la revendication 2, **caractérisé en ce que** le premier logement (22) est disposé à côté d'une limite arrière (10) de l'élément de toit avant (7).

4. Toit selon la revendication 2, **caractérisé en ce que** le deuxième logement (23) est disposé à côté d'une limite avant (11) de l'élément de toit arrière (8).

5. Toit selon les revendications 1 et 2, **caractérisé en ce que** les logements (22 et 23) présentent des coulisses de commande (24 et 25) avec une forme approximativement ovale, dans lesquelles viennent en prise des tourillons de commande correspondants (25 et 26) des deux bras de levier (18 et 19).

6. Toit selon les revendications 2 et 3, **caractérisé en ce qu'**au moins le premier logement (22) de l'élément de toit avant (7) est ouvert dans un côté (Sv) situé en avant, vu dans la direction de conduite (B).

7. Toit selon les revendications 2 et 3, **caractérisé en ce que** le levier de commande (15) présente une forme en U, dont les branches (S1 et S2) forment les bras de levier (18 et 19).

8. Toit selon la revendication 1, **caractérisé en ce que** l'élément de toit arrière (8) est monté à côté d'une limite arrière (12) au moyen d'un axe de pivotement (13) sur la carrosserie (2) et une limite avant (11) de l'élément de toit arrière (8) peut être abaissée dans la direction d'un habitacle du véhicule (14).

9. Procédé pour le fonctionnement des éléments du toit selon l'un ou plusieurs des revendications précédentes, **caractérisé en ce que** l'élément de toit avant (7) est déplaçable en longueur à la manière d'un toit ouvrant et, dans le cas de déplacement longitudinaux (Lb) coopère par l'intermédiaire du levier de commande (15) avec l'élément de toit arrière (8), lequel levier de commande (15), commandé par force dans le cas d'un déplacement d'ouverture (Öb) de l'élément de toit avant (7) abaisse l'élément de toit arrière (8) et dans le cas d'un déplacement de fermeture (Schb) de l'élément de toit avant (7) soulève l'élément de toit arrière (8).

10. Procédé selon la revendication 9, **caractérisé en ce que** le levier de commande (15), dans la position d'ouverture (OstII) de l'élément de toit avant (7) est désaccouplé dudit élément de toit avant (7).
